# EUROPEAN PATENT APPLICATION

(11) **EP 4 682 829 A1**
(43) Date of publication of application: **21.01.2026**
(21) Application number: 24919141.2
(22) Date of filing: 31.05.2024
(51) Int. Cl.: G06T 11/00

(54) **IMAGE PROCESSING SYSTEM, IMAGE PROCESSING METHOD, PROGRAM, AND DATA STRUCTURE**

(71) Applicant: Rakuten Group, Inc., Setagaya-ku Tokyo 158-0094 (JP)
(72) Inventor: OLIVEIRA, Tiago, Tokyo 158-0094 (JP); ROXAS, Menandro, Tokyo 158-0094 (JP); PRAKASHA, Preetham, Tokyo 158-0094 (JP); STENGER, Bjorn, Tokyo 158-0094 (JP)
(74) Representative: Hoffmann Eitle
(86) International application number: PCT/JP2024/020015
(87) International publication number: WO 2025/248752

(57) **Abstract**

To more efficiently generate an image including an object and a background, an image processing method includes the steps of: acquiring a plurality of images to be processed that each represent an object and also a background of the object (Step S103); generating, from each of the plurality of images to be processed, a candidate background image that is free from an image of the object represented in the image to be processed (Step S105); and storing, in a storage unit, at least some of the candidate background images respectively generated from the plurality of images to be processed in association with information indicating a type of the object represented in an image to be processed from which the candidate background image has been generated (Step S106).

## Description

### Technical Field

The present invention relates to an image processing system, an image processing method, a program, and a data structure.

### Background Art

For example, in a case of displaying an image of some object on a website, an image in which the object is arranged against an appropriate background is displayed in order to effectively convey an appeal of the object. There is also provided a service that uses a generative AI to generate an image in which an object is arranged against a background suitable for the object.

### Summary of Invention

### Technical Problem

When a generative AI is used to generate an image including an object and a background, a large number of computing resources are required for the generation, which is liable to cause inconvenience, for example, poor response.

An objective of the present disclosure is to provide a technology that enables more efficient generation of an image including an object and a background.

### Solution to Problem

(1) There is provided an image processing method including the steps of: acquiring a plurality of images to be processed that each represent an object and also a background of the object; generating, from each of the plurality of images to be processed, a candidate background image that is free from an image of the object represented in the each of the plurality of images to be processed; and storing, in a storage unit, at least some of the candidate background images respectively generated from the plurality of images to be processed in association with information indicating a type of the object represented in an image to be processed from which a corresponding one of the candidate background images has been generated.
(2) The image processing method according to Item (1) a step of acquiring information indicating an attitude of the object represented in each of the plurality of images to be processed, and the step of storing includes storing, in the storage unit, at least some of the candidate background images respectively generated from the plurality of images to be processed in association with the information indicating the type of the object represented in an image to be processed from which a corresponding one of the candidate background images has been generated, and information indicating the attitude of the object represented in the image to be processed.
(3) The image processing method according to Item (1) or (2) further includes a step of acquiring a size of the image of the object represented in each of the plurality of images to be processed, and the step of storing includes storing at least some of the candidate background images respectively generated from the plurality of images to be processed in association with the information indicating the type of the object represented in an image to be processed from which a corresponding one of the candidate background images has been generated, and the size of the image of the object included in the image to be processed.
(4) The image processing method according to any one of Items (1) to (3) further includes a step of acquiring a position of the image of the object included in each of the plurality of images to be processed, and the step of storing includes storing at least some of the candidate background images respectively generated from the plurality of images to be processed in association with the information indicating the type of the object represented in an image to be processed from which a corresponding one of the candidate background images has been generated and the position of the image of the object represented in the image to be processed.
(5) In the image processing method according to any one of Items (1) to (4), the step of acquiring the plurality of images to be processed includes inputting each image of a plurality of the objects to a target image generation model, which is a machine learning model configured to generate, from an image of an object, an image in which the object and also a background are represented, and acquiring output of the target image generation model, to thereby acquire the plurality of images to be processed.
(6) In the image processing method according to Item (5), the step of acquiring the plurality of images to be processed includes instructing the target image generation model to generate the plurality of images to be processed based on an original image of each of the plurality of the objects in a given attitude, and the step of storing includes storing, in the storage unit, at least some of the candidate background images respectively generated from the plurality of images to be processed in association with the given attitude of the original image of an object from which a corresponding one of the plurality of images to be processed has been generated and the information indicating the type of the object.
(7) In the image processing method according to Item (5), the step of acquiring the plurality of images to be processed includes instructing, for each of the plurality of the objects, the target image generation model to generate an image to be processed that includes the image of the each of the plurality of the objects and the background based on an original image of the each of the plurality of the objects, and the step of storing includes storing, in the storage unit, at least some of the candidate background images respectively generated from the plurality of images to be processed in association with at least one of a position or a size of the image of an object represented in a corresponding one of the plurality of images to be processed, and the information indicating the type of the object.
(8) In the image processing method according to any one of Items (1) to (7), the step of generating the candidate background image includes acquiring the candidate background image in which, from each of the plurality of images to be processed, the image of the object represented in the each of the plurality of images to be processed has been removed and a region in the background hidden by the image of the object has been subjected to interpolation by an image editing model, which is a machine learning model configured to edit an input image.
(9) There is provided an image processing system including: image acquisition means for acquiring a plurality of images to be processed that each represent an object and also a background of the object; image generation means for generating, from each of the plurality of images to be processed, a candidate background image that is free from an image of the object included in the each of the plurality of images to be processed; and storage processing means for storing, in a storage unit, at least some of the candidate background images respectively generated from the plurality of images to be processed in association with information indicating a type of the object represented in an image to be processed from which a corresponding one of the candidate background images has been generated.
(10) There is provided a program for causing a computer to function as: image acquisition means for acquiring a plurality of images to be processed that each represent an object and also a background of the object; image generation means for generating, from each of the plurality of images to be processed, a candidate background image that is free from an image of the object included in the each of the plurality of images to be processed; and storage processing means for storing, in a storage unit, at least some of the candidate background images respectively generated from the plurality of images to be processed in association with information indicating a type of the object represented in an image to be processed from which a corresponding one of the candidate background images has been generated.
(11) There is provided an image processing method including the steps of: acquiring an image of an object to be superimposed, information indicating a type of the object to be superimposed, and information indicating an attitude of the object to be superimposed; selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed; generating an image in which the image of the object to be superimposed has been superimposed on the selected one of the plurality of candidate background images; and outputting information on the generated image.
(12) In the image processing method according to Item (11), the storage unit is configured to store the plurality of candidate background images in association with the information indicating the type of the object represented in the image to be processed from which the corresponding one of the plurality of candidate background images has been generated, the information indicating the attitude of the object represented in the image to be processed, and information indicating a size of the object represented in the image to be processed, and the step of generating includes generating an image in which an image of the object to be superimposed that has been enlarged or reduced based on the size stored in association with the selected one of the plurality of candidate background images has been superimposed on the selected one of the plurality of candidate background images.
(13) In the image processing method according to Item (11) or (12), the storage unit is configured to store the plurality of candidate background images in association with the information indicating the type of the object represented in the image to be processed from which the corresponding one of the plurality of candidate background images has been generated, the information indicating the attitude of the object represented in the image to be processed, and a position of an image of the object represented in the image to be processed, and the step of generating includes generating an image in which an image of the object to be superimposed has been superimposed on the selected one of the plurality of candidate background images based on the position stored in association with the selected one of the plurality of candidate background images.
(14) There is provided an image processing system including: target acquisition means for acquiring an image of an object to be superimposed, information indicating a type of the object to be superimposed, and information indicating an attitude of the object to be superimposed; image selection means for selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed; generation means for generating an image in which the image of the object to be superimposed has been superimposed on the selected one of the plurality of candidate background images; and output means for outputting information on the generated image.
(15) There is provided a program: target acquisition means for acquiring an image of an object to be superimposed, information indicating a type of the object to be superimposed, and information indicating an attitude of the object to be superimposed; image selection means for selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed; generation means for generating an image in which the image of the object to be superimposed has been superimposed on the selected one of the plurality of candidate background images; and output means for outputting information on the generated image.
(16) There is provided a data structure including: a plurality of candidate background images which have been respectively generated from a plurality of images to be processed that each represent an object and also a background of the object and which are free from an image of the object included in a corresponding one of the plurality of images to be processed; and information indicating a type of the object represented in an image to be processed from which a corresponding one of the plurality of candidate background images has been generated, and information indicating an attitude of the object represented in the image to be processed, which are associated with the corresponding one of the plurality of candidate background images.

### Advantageous Effects of Invention

According to the present invention, it is possible to more efficiently generate the image including the object and the background.

### Brief Description of Drawings

FIG. 1 is a diagram for illustrating an example of elements relating to an image processing system according to an embodiment of the present invention.
FIG. 2 is a block diagram for illustrating functions implemented by the image processing system.
FIG. 3 is a flow chart for illustrating an example of processing of the background generation system.
FIG. 4 is a table for showing an example of information stored in an original storing unit.
FIG. 5 is a view for illustrating an example of an original image of an object.
FIG. 6 is a view for illustrating an example of a generated background-added image.
FIG. 7 is a view for illustrating an example of a candidate background image generated from the background-added image.
FIG. 8 is a table for showing an example of information stored in a candidate storing unit.
FIG. 9 is a flow chart for illustrating an example of processing of an image superimposition system.
FIG. 10 is a view for illustrating an example of a query image.
FIG. 11 is a view for illustrating an example of an image in which the query image and a background are superimposed.

### Description of Embodiments

Now, an embodiment of the present invention is described with reference to the drawings. Redundant description of configurations denoted by the same reference symbols is omitted.

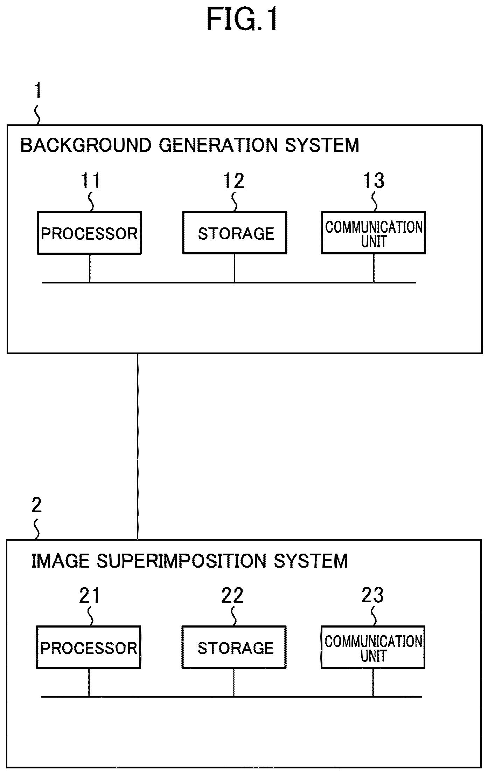

FIG. 1 is a diagram for illustrating an example of elements relating to an image processing system according to the embodiment of the present invention. The image processing system includes a background generation system 1 and an image superimposition system 2. The background generation system 1 and the image superimposition system 2 are implemented by one or more computers. The background generation system 1 and the image superimposition system 2 are not required to be separated.

The background generation system 1 generates in advance candidate background images suitable for a type and an attitude of an object through use of a generative AI, and stores the candidate background images. Then, the image superimposition system 2 selects one of the candidate background images for a query image of an object that requires addition of a background, and superimposes the image of the object on the selected candidate background image, to thereby generate an image with a background.

Each of the background generation system 1 and the image superimposition system 2 includes one or more computers (for example, server computers). The background generation system 1 includes one or more processors 11, one or more storages 12, and one or more communication units 13. The image superimposition system 2 includes one or more processors 21, one or more storages 22, and one or more communication units 23. The background generation system 1 may include a plurality of computers each including one or more processors 11, storages 12, and communication units 13, or may include one computer including one or more processors 11 and storages 12. The image superimposition system 2 may include a plurality of computers each including one or more processors 21, storages 22, and communication units 23, or may include one computer including one or more processors 21 and storages 22. The background generation system 1 and the image superimposition system 2 may be implemented on one or more virtual servers or container platforms.

The processors 11 and 21 operate based on programs (also referred to as "instruction codes") stored in the storages 12 and 22, respectively. The processors 11 and 21 control the communication units 13 and 23, respectively. The processors 11 and 21 each include, for example, a central processing unit (CPU), and may further include a graphic processing unit (GPU) and a neural processing unit (NPU). The above-mentioned program may be provided through, for example, the Internet, or may be provided by being stored in a flash memory, a DVD-ROM, or another computer-readable storage medium.

The storages 12 and 22 are each formed of a memory device such as a RAM or a flash memory, and an external storage device such as a hard disk drive (HDD) or a solid state drive (SSD). The storages 12 and 22 each store the above-mentioned program. The storages 12 and 22 also store information and calculation results that are input from the processors 11 and 12 and the communication units 13 and 23, respectively.

The communication units 13 and 23 are each a communication interface, such as a network interface card, which communicates to and from other devices. The communication units 13 and 23 are each formed of, for example, an integrated circuit, an antenna, and a communication terminal which implement a wireless LAN or a wired LAN. The communication units 13 and 23 input information received from another device to the processors 11 and 21 and the storages 12 and 22 via a network and transmit the information to another device under the control of the processors 11 and 21, respectively.

The hardware configurations of the background generation system 1 and the image superimposition system 2 are not limited to the example described above. For example, the background generation system 1 and the image superimposition system 2 may each include a device which reads a computer-readable information storage medium (for example, an optical disc drive or a memory card slot) and a device through which data is input from and output to an external device (for example, a USB port). The external device may be an input device or an output device.

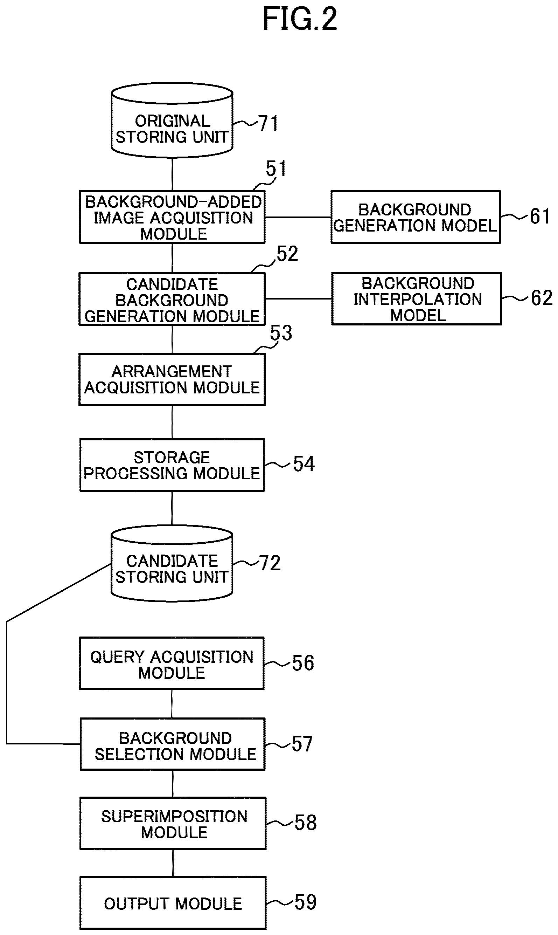

Next, functions provided by the image processing system are described. FIG. 2 is a block diagram for illustrating functions implemented by the image processing system. The image processing system functionally includes a background-added image acquisition module 51, a candidate background generation module 52, an arrangement acquisition module 53, a storage processing module 54, a query acquisition module 56, a background selection module 57, a superimposition module 58, an output module 59, a background generation model 61, a background interpolation model 62, an original storing unit 71, and a candidate storing unit 72. The background-added image acquisition module 51, the candidate background generation module 52, the arrangement acquisition module 53, the storage processing module 54, the background generation model 61, and the background interpolation model 62, are mainly implemented by the processor 11 executing programs corresponding to the respective functions which are stored in the storage 12, and controlling the communication unit 13 or the like. The query acquisition module 56, the background selection module 57, the superimposition module 58, and the output module 59 are implemented mainly by the processor 21 executing programs corresponding to the respective function which are stored in the storage 22, and controlling the communication unit 23 or the like. The original storing unit 71 is implemented mainly by the storage 12. The candidate storing unit 72 may be implemented mainly by the storage 12 or the storage 22.

The original storing unit 71 stores an original image of an object to be used for generating a candidate background image in association with a type (category) and an attitude of the object. The attitude indicates an orientation of the object in the original image.

The candidate storing unit 72 stores a plurality of candidate background images in association with the type and the attitude of the object. The type of the object is the type of the object in the original image used for generating a candidate background image, and the attitude is the attitude of the object in the original image used for generating a candidate background image. The candidate storing unit 72 may further store the plurality of candidate background images in association with a position and a size of the image of the object. A method of determining the position and the size of the object is described later.

The background-added image acquisition module 51 acquires a plurality of background-added images that each represent an object and also a background of the object. The background-added image acquisition module 51 also acquires information indicating the type of the object represented in each of the plurality of background-added images and information indicating the attitude of the object represented in each of the plurality of background-added images.

The background generation model 61 is a machine learning model that generates, from an input image of the object, an image in which the object and also a background are represented and outputs the image. The background-added image acquisition module 51 instructs, for each of a plurality of objects, the background generation model 61 to generate a background-added image including an image of the object and a background based on the original image of the object, and acquires the background-added image output by the background generation model 61. The background generation model 61 may be a model that forms an image generation tool such as Stable Diffusion including an extended function of Canny Edge in ControlNet. The background generation model 61 may be implemented on one or more computers different from those for the background generation system 1.

The candidate background generation module 52 acquires, from each of the plurality of background-added images, a candidate background image that does not include the image of the object represented in the background-added image.

The background interpolation model 62 generates, based on the background-added image, an image in which the image of the object has been removed and a region in the background hidden by the image of the object in the background-added image has been subjected to interpolation. The background interpolation model 62 may receive input of an image in which the image of the object has been removed from the background-added image, or may receive input of the background-added image and information indicating the region of the image of the object. The candidate background generation module 52 instructs, based on the background-added image, the generation of an image in which the region of the background has been subjected to the interpolation, and acquires the image output by the background interpolation model 62 as the candidate background image. The background interpolation model 62 may be, for example, a machine learning model that implements so-called Inpainting through use of the Lama method. The background interpolation model 62 may be implemented on one or more computers different from those for the background generation system 1.

The arrangement acquisition module 53 acquires the size of the image of the object represented in each of the plurality of background-added images and the position of the image of the object in the background-added image.

The storage processing module 54 stores at least some of the candidate background images respectively generated from the plurality of background-added images in the candidate storing unit 72 in association with the information indicating the type of the object represented in the background-added image from which the candidate background image has been generated. The storage processing module 54 stores at least some of the candidate background images in a storage unit in association with information indicating a type thereof and the information indicating the attitude of the object represented in the background-added image from which the candidate background image has been generated. The storage processing module 54 may further store at least some of the candidate background images respectively generated from the plurality of background-added images in association with at least one of the size of the image of the object included in the background-added image or the position of the image of the object represented in the background-added image.

The query acquisition module 56 acquires a query image which is an image of a target object for superimposition, information indicating a type of the target object, and information indicating the attitude of the target object.

The background selection module 57 selects one of the candidate background images stored in the candidate storing unit 72 based on information indicating the type of the target object for superimposition and information indicating the attitude of the target object.

The superimposition module 58 generates an image in which the query image is superimposed on the selected candidate background image. The superimposition module 58 may generate an image in which an image of the target object enlarged or reduced based on the size stored in the candidate storing unit 72 in association with the selected candidate background image is superimposed on the selected candidate background image. The superimposition module 58 may also generate an image in which an image of the target object is superimposed on the selected candidate background image based on the position stored in the candidate storing unit 72 in association with the selected candidate background image.

The output module 59 outputs information on the image in which the image of the target object is superimposed on the selected candidate background image.

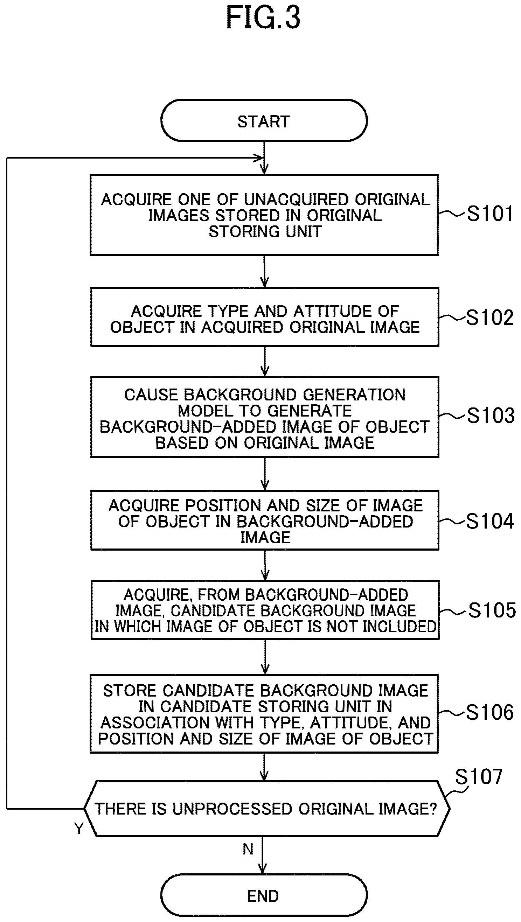

Next, processing of the background generation system 1 is described. FIG. 3 is a flow chart for illustrating an example of the processing of the background generation system 1. In FIG. 3, a processing flow regarding processing for generating candidate background images and storing the candidate background images in the candidate storing unit 72 is illustrated.

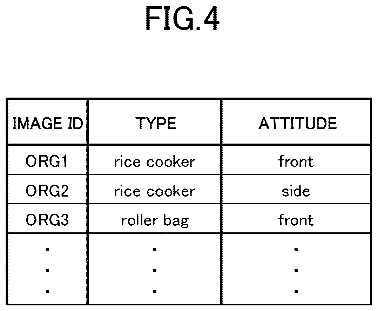

It is assumed that, before the processing illustrated in FIG. 3 is started, an original image of each object is stored in the original storing unit 71 in association with the type (category) and the attitude of the object. FIG. 4 is a table for showing an example of information stored in the original storing unit 71. In FIG. 4, in place of the images themselves, image IDs are each stored in the original storing unit 71 in association with a type and an attitude.

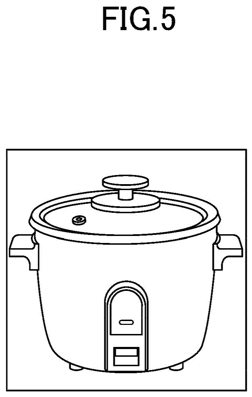

In FIG. 4, for example, an original image with an image ID being "ORG1" is associated with a type "rice cooker" and an attitude "front." In addition, an original image with an image ID being "ORG2" is associated with the type "rice cooker" and an attitude "side." FIG. 5 is a view for illustrating an example of the original image of the object. FIG. 5 is an illustration of an example of the original image with the image ID being "ORG1." In the original image of the object illustrated in FIG. 5, the background of the object is plain. As shown in FIG. 4, the attitude is not required to exhibit a strict angle, and may be information indicating a specific one of a predetermined number of candidate values.

Details of the processing of FIG. 3 are described. First, the background-added image acquisition module 51 acquires one of one or more unacquired original images stored in the original storing unit 71 (Step S101). The background-added image acquisition module 51 also acquires the type and the attitude of the object in the acquired original image from the original storing unit 71 (Step S102).

The background-added image acquisition module 51 causes the background generation model 61 to generate a background-added image of the object based on the acquired original image (Step S103). More specifically, the background-added image acquisition module 51 instructs the background generation model 61 to generate a background-added image including an image of the object and a background based on the original image of the object, and acquires the background-added image output by the background generation model 61.

For example, the background-added image acquisition module 51 may input a command to acquire the contour of the acquired original image by Canny Edge of ControlNet and further generate a background-added image based on the contour to Stable Diffusion (for example, more specifically, realistic-vision based on Stable Diffusion), to thereby input an image (for example, an image of a contour) based on the original image to the background generation model 61 that forms Stable Diffusion and acquire the background-added image. This command may further include at least some of the type and the attitude of the object and background text associated with the type that are to be input to the background generation model 61. The position and the size of the object may be adjusted in advance in the image to be input to the background generation model 61, and the background generation model 61 may output an image in which the object has been arranged at the same position and size as those of the input image.

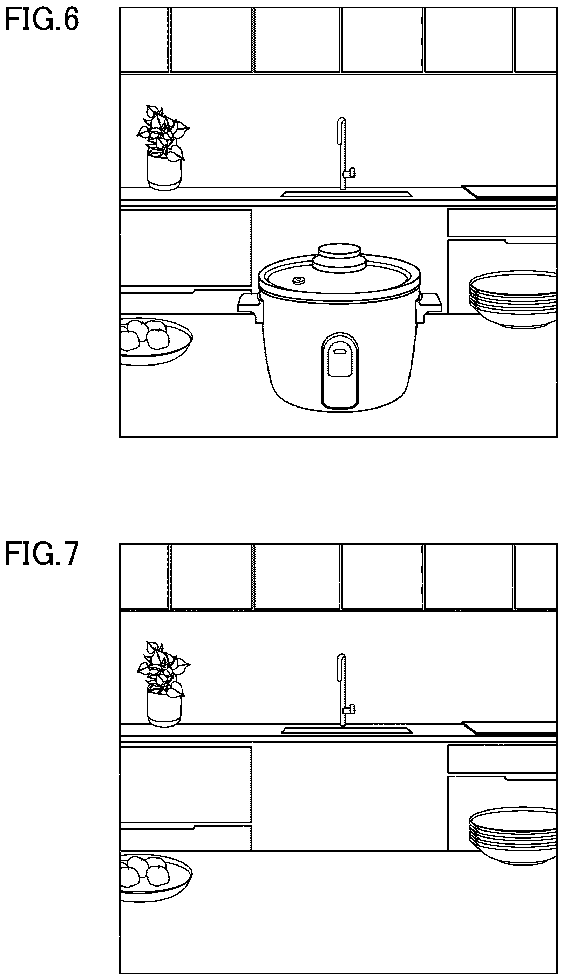

FIG. 6 is a view for illustrating an example of a generated background-added image. The background-added image in which an image of the object and also a background suitable for the object are represented is generated by the background-added image acquisition module 51 and the background generation model 61. When Canny Edge is used, a color of the object in the background-added image may differ from that of the original image, but the object in the background-added image is erased in later processing, thereby causing no problem.

When a background-added image is generated, the arrangement acquisition module 53 acquires the position and the size of the image of the object in the background-added image (Step S104). The arrangement acquisition module 53 may input the background-added image and the type of the object into a trained machine learning model (for example, Grounding DINO) that returns, when the image and the type of the object are input, the position and the size of the image of the object in the image, and acquire output of the machine learning model, to thereby acquire the position and the size of the image of the object. The position and the size of the image of the object may also be acquired by executing a so-called Region Proposal method on the background-added image. Alternatively, a so-called pattern matching method may be used to search for a region in the background-added image that matches the original image, and a position and a size of the retrieved region may be acquired.

When the background generation model 61 outputs an image in which the object has been arranged at the same position and size as those of the input image, the position and the size of the object that have been adjusted in advance in the image to be input may be acquired as the position and the size of the image of the object in the background-added image.

Then, the candidate background generation module 52 acquires, from the background-added image, a candidate background image in which the image of the object is not included and a background hidden by the image of the object has been subjected to interpolation (Step S105). More specifically, the candidate background generation module 52 generates, based on the position and the size of the acquired image of the object, mask information for masking a region of an object image to be deleted in the background-added image. The candidate background generation module 52 inputs the background-added image and the mask information to the background interpolation model 62, and acquires an image of output of the background interpolation model 62 as the candidate background image.

The background interpolation model 62 may be, for example, a trained machine learning model called Lama-big. The image output from the background interpolation model 62 may be input to another trained machine learning model (for example, a refiner provided by realistic-vision) called Refiner that improves quality of the image, and the candidate background generation module 52 may acquire output of the machine learning model as the candidate background image.

FIG. 7 is a view for illustrating an example of a candidate background image generated from the background-added image. The image illustrated in FIG. 7 is an example of a candidate background image generated from the background-added image illustrated in FIG. 6. Through use of a publicly-known generative AI technology, it is possible to generate a natural candidate background image in which the object has been removed from the background-added image.

The background interpolation model 62 may be another type of trained machine learning model that subjects the background to interpolation. The background interpolation model 62 may be configured to receive input of an image obtained by removing the image of the object from the background-added image, in place of the mask information and the background-added image, and the candidate background generation module 52 may input the removed image to the background interpolation model 62.

When the candidate background image is acquired, the storage processing module 54 stores the candidate background image in the candidate storing unit 72 in association with the type of the object, the attitude of the object, and the position and the size of the object in the background-added image that have been acquired (Step S106). The storage processing module 54 may store the candidate background image in the candidate storing unit 72 in association with at least some of the type of the object, the attitude of the object, and the position and the size of the object in the background-added image that have been acquired.

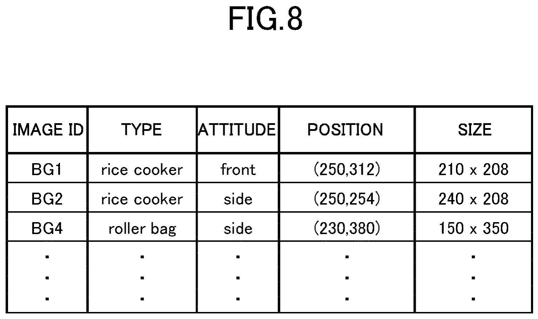

FIG. 8 is a table for showing an example of information stored in the candidate storing unit 72. In place of the candidate background images themselves, image IDs of the candidate background images are each stored in the candidate storing unit 72 in association with the type, the attitude, the position of the object, and the size of the object. An image with an image ID being "BG1" is, for example, the image illustrated in FIG. 7. In the example of FIG. 8, the position of the object is indicated by xy coordinates, and the size of the object is indicated by the numbers of dots in vertical and horizontal directions.

In this case, the storage processing module 54 may avoid storing some of the acquired candidate background images in the candidate storing unit 72. For example, the storage processing module 54 may determine whether or not the quality of the candidate background images is sufficient by some method, and store the candidate background images determined to have sufficient quality in the candidate storing unit 72 in association with the type, the attitude, the position, the size, and the like. The storage processing module 54 may also store the acquired candidate background images in the candidate storing unit 72, and then delete images determined to have insufficient quality or images determined to infringe intellectual property rights such as copyrights from among the stored candidate background images.

When the processing step of Step S106 is executed, the background-added image acquisition module 51 determines whether or not there is an unprocessed original image (Step S107). When there is an unprocessed original image (Y in Step S107), the processing steps of Step S101 and the subsequent steps are repeatedly executed. When there is no unprocessed original image (Y in Step S107), the processing of FIG. 3 is ended.

In FIG. 3, the background generation system 1 processes a plurality of original images one by one in order, but the processing steps of from Step S101 to Step S106 may be simultaneously executed in parallel on the plurality of original images. Further, the original images are not required to be stored in advance in the original storing unit 71. In this case, the original image, the type, and the attitude may be input sequentially each time the processing step of Step S101 is executed.

The processing illustrated in FIG. 3 is not required to be automatically executed by the background generation system 1. In this case, each of the processing steps of from Step S101 to Step S106 may be executed by the background generation system 1, and the start of each processing step and the input of data required for the processing may be manually controlled. Further, after the processing illustrated in FIG. 3 is ended, of the candidate background images stored in the candidate storing unit 72, those determined to have insufficient quality or have issues of intellectual property rights may be deleted. Candidate background images are generated in advance, and hence it is possible to perform such determination and deletion of inappropriate candidate background images. Further, for the object, the type, and the attitude that are associated with the deleted candidate background image, the processing steps of from Step S101 to Step S105 may be repeated until a candidate background image without any issues of quality and intellectual property rights is generated, to thereby store the candidate background image without any issues of quality and intellectual property rights in the candidate storing unit 72.

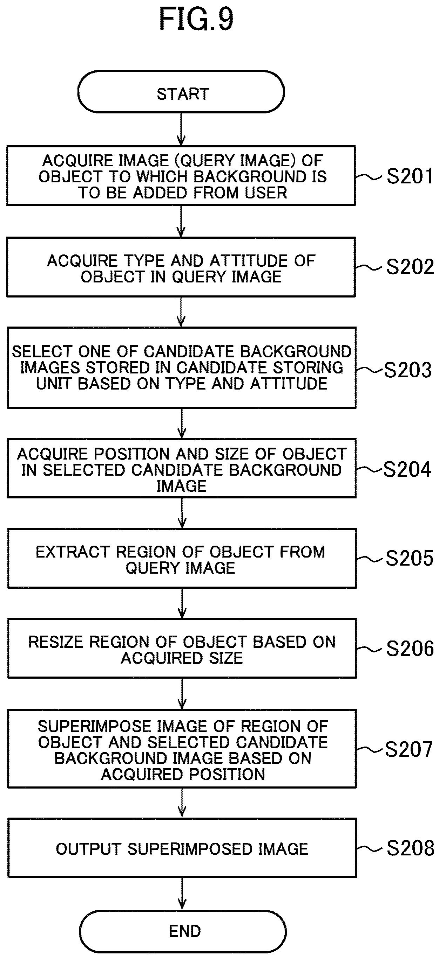

Next, processing of the image superimposition system 2 is described. FIG. 9 is a flow chart for illustrating an example of the processing of the image superimposition system 2. In FIG. 9, a processing flow regarding processing for generating an image of the object with a background through use of a candidate background image is illustrated.

Before the processing illustrated in FIG. 9 is started, candidate background images are each stored in the candidate storing unit 72 in association with at least some of the type of the object, the attitude of the object, and the position and the size of the object in the candidate background image by the processing illustrated in FIG. 3. In this case, the candidate storing unit 72 that is accessed in the processing of FIG. 9 may be copied from the storage 12 of the background generation system 1 to the storage 22 of the image superimposition system 2, or may be stored in the storage 12 or another external storage accessible to the image superimposition system 2.

First, the query acquisition module 56 acquires an image (query image) of an object to which a background is to be added from a user (Step S201). The query acquisition module 56 also acquires information indicating the type and the attitude of the object in the query image (Step S202). The query acquisition module 56 may acquire the query image, the type, and the attitude that have been input by the user, for example, through a computer operated by the user. The query acquisition module 56 may also acquire the type of the object represented in the query image by applying a publicly-known Region Proposal technology to the query image. Further, for example, the type and the attitude of the object may be acquired from the query image by a machine learning model of Region Proposal that has been trained with a combination of the object type and the attitude being set as one class.

The background selection module 57 selects one of the candidate background images stored in the candidate storing unit 72 based on the type and the attitude of the object that have been acquired for the query image (Step S203). In other words, the background selection module 57 selects a candidate background image stored in association with the same type and attitude as those acquired for the query image from among the plurality of candidate background images stored in the candidate storing unit 72. The background selection module 57 may select a candidate background image stored in association with the type and the attitude that are most similar to those acquired for the query image.

Then, the background selection module 57 acquires the position and the size of the object in the selected candidate background image that have been stored in the candidate storing unit 72 in association with the candidate background image (Step S204).

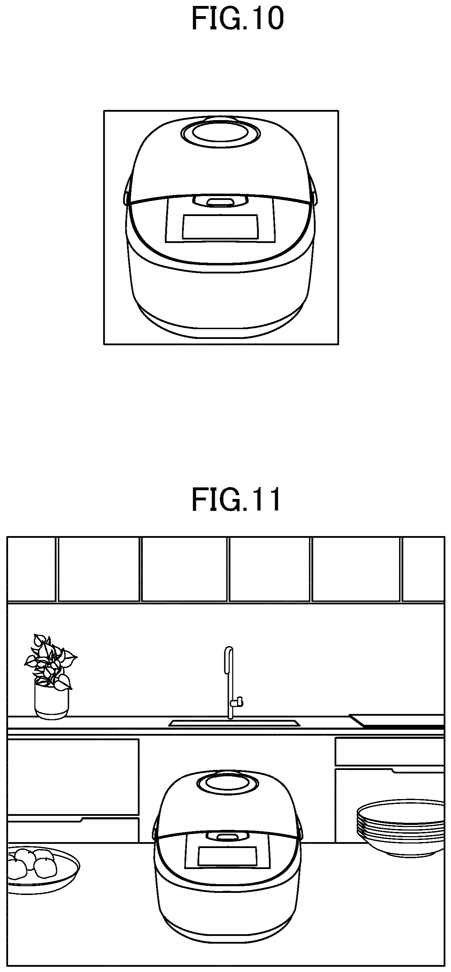

FIG. 10 is a view for illustrating an example of the query image. In the example of FIG. 10, the type and the attitude of the object are the same as those of FIG. 5. Thus, the candidate background image selected from the query image of FIG. 10 is the one illustrated in FIG. 7. In addition, the position and the size written in the row of the image ID "BG1" of FIG. 8 are acquired.

After the query image is acquired, the superimposition module 58 extracts a region (image) of the object from the query image (Step S205). The superimposition module 58 may extract the region of the object by a publicly-known segmentation technology such as u2net or is-net.

The superimposition module 58 resizes (enlarges or reduces) the extracted region of the object based on the size acquired for the candidate background image (Step S206). For example, the superimposition module 58 may resize the region of the object so that the vertical size acquired for the candidate background image is equal to the vertical size of the region after the resizing. The superimposition module 58 may resize the region of the object so that the horizontal size acquired for the candidate background image is equal to the horizontal size of the region after the resizing, or may resize the region of the object so that the area indicated by the size acquired for the candidate background image is equal to the area of the region after the resizing.

The superimposition module 58 superimposes the image of the resized region of the object and the selected candidate background image based on the position acquired for the candidate background image (Step S207). The superimposition module 58 superimposes the image of the region of the object in front of the candidate background image. The superimposition may be to generate information on each pixel of the superimposed image, or may be to generate meta information that logically superimposes a layer of the image of the region of the object and a layer of the candidate background image.

The superimposition module 58 may correct, by a machine learning model, the image in which the image of the region of the object and the selected candidate background image are superimposed in order to make the superimposed image more natural. For example, the machine learning model may be used to harmonize the image of the object and the background and adjust shadows through use of a method as described in the research paper "PCT-Net: Full Resolution Image Harmonization Using PixelWise Color Transformations." This research paper is published at the URL https://openaccess.thecvf.com/content/CVPR2023/papers/Guerreir o_PCT-Net_Full_Resolution_Image_Harmonization_Using_PixelWise_Color_Transformations_CVPR_2023_paper.pdf. The superimposition module 58 may further input the image in which the image of the region of the object and the selected candidate background image are superimposed or the image corrected by the method of the above-mentioned research paper to another trained machine learning model called Refiner to acquire an image with improved quality.

After the superimposition has been performed, the output module 59 outputs the superimposed image (Step S208). The image to be output may be an image that has been corrected as described above. The output module 59 may output the image by transmitting information on the image to the computer operated by the user, or may output the image by storing information on the image in a predetermined storage or database.

FIG. 11 is a view for illustrating an example of the image in which the query image and the background are superimposed. In the example of FIG. 11, an image in which the image of the object illustrated in FIG. 10 and the candidate background image illustrated in FIG. 7 are superimposed is illustrated.

In this embodiment, candidate background images suitable for the type of an object are generated in advance, to thereby enable a time period after the user inputs an image of an object (query image) until an image with a background is generated to be greatly reduced. Further, candidate background images suitable for the attitude of the object are generated in advance, to thereby enable the generated image with a background to be more natural.

In this embodiment, a candidate background image is generated from an image of an object with a background. In the image of the object with the background, the relationship between the object and the background is highly likely to be natural. In this case, the position and the size of the object in the image of the object with the background are used to superimpose the object in the query image. Those configurations can prevent the position and the size of the object in the superimposed image from becoming unnatural. In addition, through application of a technology for deleting the object from the background-added image and further subjecting the region hidden by the object to interpolation, it is possible to generate a candidate background image that is resistant to changes in shape of the object.

The present invention is not limited to that described in the above-mentioned embodiment. For example, the background-added image acquisition module 51 may acquire a background-added image in which an object is photographed together with a background instead of generating a background-added image from the original image of the object. In this case, the background-added image may be stored in the original storing unit 71 in place of the original image, and the processing steps of from Step S104 to Step S106 of FIG. 3 may be performed for each of the background-added images.

## Claims

1. An image processing method, comprising the steps of:
acquiring a plurality of images to be processed that each represent an object and also a background of the object;
generating, from each of the plurality of images to be processed, a candidate background image that is free from an image of the object represented in the each of the plurality of images to be processed; and
storing, in a storage unit, at least some of the candidate background images respectively generated from the plurality of images to be processed in association with information indicating a type of the object represented in an image to be processed from which a corresponding one of the candidate background images has been generated.

2. The image processing method according to claim 1, a step of acquiring information indicating an attitude of the object represented in each of the plurality of images to be processed,
wherein the step of storing includes storing, in the storage unit, at least some of the candidate background images respectively generated from the plurality of images to be processed in association with the information indicating the type of the object represented in an image to be processed from which a corresponding one of the candidate background images has been generated, and information indicating the attitude of the object represented in the image to be processed.

3. The image processing method according to claim 1, further comprising:
a step of acquiring a size of the image of the object represented in each of the plurality of images to be processed,
wherein the step of storing includes storing at least some of the candidate background images respectively generated from the plurality of images to be processed in association with the information indicating the type of the object represented in an image to be processed from which a corresponding one of the candidate background images has been generated, and the size of the image of the object included in the image to be processed.

4. The image processing method according to claim 1, further comprising:
a step of acquiring a position of the image of the object included in each of the plurality of images to be processed,
wherein the step of storing includes storing at least some of the candidate background images respectively generated from the plurality of images to be processed in association with the information indicating the type of the object represented in an image to be processed from which a corresponding one of the candidate background images has been generated, and the position of the image of the object represented in the image to be processed.

5. The image processing method according to claim 1, wherein the step of acquiring the plurality of images to be processed includes inputting each image of a plurality of the objects to a target image generation model, which is a machine learning model configured to generate, from an image of an object, an image in which the object and also a background are represented, and acquiring output of the target image generation model, to thereby acquire the plurality of images to be processed.

6. The image processing method according to claim 5,
wherein the step of acquiring the plurality of images to be processed includes instructing the target image generation model to generate the plurality of images to be processed based on an original image of each of the plurality of the objects in a given attitude, and
wherein the step of storing includes storing, in the storage unit, at least some of the candidate background images respectively generated from the plurality of images to be processed in association with the given attitude of the original image of an object from which a corresponding one of the plurality of images to be processed has been generated and the information indicating the type of the object.

7. The image processing method according to claim 5,
wherein the step of acquiring the plurality of images to be processed includes instructing, for each of the plurality of the objects, the target image generation model to generate an image to be processed that includes the image of the each of the plurality of the objects and the background based on an original image of the each of the plurality of the objects, and
wherein the step of storing includes storing, in the storage unit, at least some of the candidate background images respectively generated from the plurality of images to be processed in association with at least one of a position or a size of the image of an object represented in a corresponding one of the plurality of images to be processed, and the information indicating the type of the object.

8. The image processing method according to claim 1, wherein the step of generating the candidate background image includes acquiring the candidate background image in which, from each of the plurality of images to be processed, the image of the object represented in the each of the plurality of images to be processed has been removed and a region in the background hidden by the image of the object has been subjected to interpolation by an image editing model, which is a machine learning model configured to edit an input image.

9. An image processing system, comprising:
image acquisition means for acquiring a plurality of images to be processed that each represent an object and also a background of the object;
image generation means for generating, from each of the plurality of images to be processed, a candidate background image that is free from an image of the object included in the each of the plurality of images to be processed; and
storage processing means for storing, in a storage unit, at least some of the candidate background images respectively generated from the plurality of images to be processed in association with information indicating a type of the object represented in an image to be processed from which a corresponding one of the candidate background images has been generated.

10. A program for causing a computer to function as:
image acquisition means for acquiring a plurality of images to be processed that each represent an object and also a background of the object;
image generation means for generating, from each of the plurality of images to be processed, a candidate background image that is free from an image of the object included in the each of the plurality of images to be processed; and
storage processing means for storing, in a storage unit, at least some of the candidate background images respectively generated from the plurality of images to be processed in association with information indicating a type of the object represented in an image to be processed from which a corresponding one of the candidate background images has been generated.

11. An image processing method, comprising the steps of:
acquiring an image of an object to be superimposed, information indicating a type of the object to be superimposed, and information indicating an attitude of the object to be superimposed;
selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed;
generating an image in which the image of the object to be superimposed has been superimposed on the selected one of the plurality of candidate background images; and
outputting information on the generated image.

12. The image processing method according to claim 11,
wherein the storage unit is configured to store the plurality of candidate background images in association with the information indicating the type of the object represented in the image to be processed from which the corresponding one of the plurality of candidate background images has been generated, the information indicating the attitude of the object represented in the image to be processed, and information indicating a size of the object represented in the image to be processed, and
wherein the step of generating includes generating an image in which an image of the object to be superimposed that has been enlarged or reduced based on the size stored in association with the selected one of the plurality of candidate background images has been superimposed on the selected one of the plurality of candidate background images.

13. The image processing method according to claim 11,
wherein the storage unit is configured to store the plurality of candidate background images in association with the information indicating the type of the object represented in the image to be processed from which the corresponding one of the plurality of candidate background images has been generated, the information indicating the attitude of the object represented in the image to be processed, and a position of an image of the object represented in the image to be processed, and
wherein the step of generating includes generating an image in which an image of the object to be superimposed has been superimposed on the selected one of the plurality of candidate background images based on the position stored in association with the selected one of the plurality of candidate background images.

14. An image processing method, comprising:
target acquisition means for acquiring an image of an object to be superimposed, information indicating a type of the object to be superimposed, and information indicating an attitude of the object to be superimposed;
image selection means for selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed;
generation means for generating an image in which the image of the object to be superimposed has been superimposed on the selected one of the plurality of candidate background images; and
output means for outputting information on the generated image.

15. A program for causing a computer to function as:
target acquisition means for acquiring an image of an object to be superimposed, information indicating a type of the object to be superimposed, and information indicating an attitude of the object to be superimposed;
image selection means for selecting one of a plurality of candidate background images based on the information indicating the type of the object to be superimposed and the information indicating the attitude of the object to be superimposed, the plurality of candidate background images having been respectively generated from a plurality of images to be processed that each represent an object and also a background of the object, being free from an image of the object included in a corresponding one of the plurality of images to be processed, and being stored in a storage unit configured to store the plurality of candidate background images in association with information indicating a type of the object represented in an image to be processed from which a corresponding one of the plurality of candidate background images has been generated, and information indicating an attitude of the object represented in the image to be processed;
generation means for generating an image in which the image of the object to be superimposed has been superimposed on the selected one of the plurality of candidate background images; and
output means for outputting information on the generated image.

16. A data structure, comprising:
a plurality of candidate background images which have been respectively generated from a plurality of images to be processed that each represent an object and also a background of the object and which are free from an image of the object included in a corresponding one of the plurality of images to be processed; and
information indicating a type of the object represented in an image to be processed from which a corresponding one of the plurality of candidate background images has been generated, and information indicating an attitude of the object represented in the image to be processed, which are associated with the corresponding one of the plurality of candidate background images.
